# EUROPÄISCHE PATENTSCHRIFT

(11) **EP 3 895 903 B1**
(45) Veröffentlichungstag und Bekanntmachung des Hinweises auf die Patenterteilung: **23.11.2022**
(21) Anmeldenummer: 20382299.4
(22) Anmeldetag: 15.04.2020
(51) Int. Cl.: B60B 35/04, B60B 35/08

(54) **FAHRZEUGACHSE FÜR EINE RADAUFHÄNGUNG**
VEHICLE AXLE FOR A WHEEL SUSPENSION
ESSIEU DE VÉHICULE POUR UNE SUSPENSION DE ROUE

(43) Veröffentlichungstag der Anmeldung: 20.10.2021
(73) Patentinhaber: AUTOTECH ENGINEERING S.L., 48340 Amorebieta-Etxano, Bizkaia (ES)
(72) Erfinder: Bone, Gareth, Durham, Durham DH7 8LW (GB); Bedson, Jamie, Harrogate, North Yorkshire, HG1 4FE (GB); Johnson, Alice, Bowburn, Durham DH6 5FD (GB)
(74) Vertreter: Cohausz & Florack

(56) Entgegenhaltungen:
- EP-A2- 2 540 524
- US-A1- 2004 256 829
- US-A1- 2015 130 157

## Beschreibung

Die Erfindung betrifft eine Fahrzeugachse für eine Radaufhängung, mit einem Träger aus Verbundwerkstoff und Anbindungsteilen aus Metall, vorzugsweise Leichtmetall, z. B. aus Aluminium oder einer Legierung auf Basis von Aluminium, wobei die Anbindungsteile mit dem Träger verbunden und für eine Anbindung eines Radträgers und für eine Anbindung mindestens eines Federbauteils und/oder Dämpferbauteils hergerichtet sind.

Die Erfindung betrifft insbesondere eine Fahrzeugachse der oben genannten Art, die als nicht angetriebene Hinterachse, vorzugsweise als nicht angetriebene Starrachse für ein Kraftfahrzeug, insbesondere einen Lastkraftwagen ausgeführt ist. Herkömmliche nicht angetriebene Hinterachsen für Personen- oder Lastkraftwagen sind im Wesentlichen als reine Stahlkonstruktion ausgeführt und somit relativ schwer. Die erfindungsgemäße Fahrzeugachse ist dagegen als Leichtbaukonstruktion ausgeführt.

Aus der US 2015/0130157 A1 ist ein Aufhängungssystem in Leichtbaukonstruktion für eine Starrachse eines Schwerlastfahrzeugs bekannt. Das Aufhängungssystem umfasst zwei Verbundmaterialträger, die im montierten Zustand gelenkig am Fahrzeugrahmen angebunden und parallel und gleichmäßig beabstandet zur Fahrzeuglängsachse angeordnet sind. Der jeweilige Verbundmaterialträger hat eine äußere Schale in Form eines Hohlprofils, das aus faserverstärktem, duroplastischem Kunststoff gefertigt ist. Der Hohlraum der Schale ist mit Schaumharz gefüllt. Ein Ende des Trägers ist mit einer Buchsenhalterung zur gelenkigen Anbindung des Trägers am Fahrzeugrahmen verbunden, während das andere Ende mit einer Achshalterung zur Aufnahme der Fahrzeugachse (Starrachse) versehen ist. Die quer zur Fahrzeuglängsachse verlaufende Fahrzeugachse ist somit an beiden gelenkig gelagerten Verbundmaterialträgern gehalten. Die Fahrzeugachse ist dabei aus einem zentralen Rohr gebildet, an dessen Enden Achszapfen befestigt sind, welche die Verbundmaterialträger seitlich nach außen überragen. Die Buchsen- sowie die Achshalterungen sind im Strangziehverfahren (Pultrusion) hergestellte Halterungen. Sie sind mit dem jeweiligen Verbundmaterialträger durch Presspassung und mittels Schrauben oder Klebstoff verbunden. Das zentrale Rohr der Achse ist mit den Achshalterungen unbeweglich verbunden. Die Ausführung dieser Verbindung ist in der US 2015/0130157 A1 nicht näher spezifiziert. Die Achshalterungen dienen zugleich als Anbindungsstellen für Luftfederelemente und Stoßdämpfer.

Ein weiteres Aufhängungssystem in Leichtbaukonstruktion für eine Fahrzeugachse ist aus der US 2004/0256829 A1 bekannt. Dieses bekannte Aufhängungssystem umfasst zwei aus Verbundwerkstoff hergestellte Träger, welche die Fahrzeugachse tragen und gelenkig am Fahrzeugrahmen angebunden werden, wobei die Träger im montierten Zustand parallel und gleichmäßig beabstandet zur Fahrzeuglängsachse angeordnet sind. Jeder der beiden Träger weist an einem Ende eine Achsenanbindung und am anderen Ende eine Rahmenanbindung zur gelenkigen Anbindung des Trägers am Fahrzeugrahmen auf. Die Fahrzeugachse ist dabei aus Metall oder Verbundwerkstoff hergestellt, wobei der Verbundwerkstoff dem Verbundwerkstoff entsprechen kann, aus welchem die Träger hergestellt sind. Bei dem Verbundwerkstoff kann es sich zum Beispiel um glas- oder kohlenstofffaserverstärkten Kunststoff handeln, wobei der Träger und/oder ein Achsenrohr der Fahrzeugachse durch Strangziehen (Pultrusion) hergestellt sind. In den Enden des Achsenrohres gehaltene Achszapfen sind aus Metall hergestellt. Die Träger sind an ihrer Achsenanbindung unmittelbar mit dem Achsenrohr der Fahrzeugachse verbunden, zum Beispiel durch Kleben, unter Verwendung von Befestigungsmitteln, etc.

Wie die voranstehend genannten Druckschriften zeigen, ist es bekannt, Träger oder Achsen aus Faserverbundwerkstoff und Metallteile, wie z. B. Achsenrohre, mittels Klebstoff miteinander zu verbinden. Damit solche Klebeverbindungen eine ausreichend hohe Festigkeit sowie eine lange Lebensdauer haben, ist es erforderlich, dass der Klebstoff in einem ausreichend großen Flächenbereich Scherkräfte aufnehmen kann. Allerdings ist es aus Platz- und/oder Kostengründen gewünscht, dass die Verbindungsstellen kompakt sind bzw. nicht viel Platz benötigen.

Die EP 2 540 524 A2 offenbart einen Achskörper für ein Nutzfahrzeug, der starr und mit einer axialen Längserstreckung ausgebildet ist und der insbesondere an zwei axial beabstandeten Anbindungspunkten mittels Führungslenkern mit einem Rahmen des Nutzfahrzeugs verbindbar ist. Der Achskörper ist zumindest in einem axialen Abschnitt mit einer Profilierung ausgebildet, die aufgrund ihrer geometrischen Gestaltung einerseits zu einer geringen Torsionssteifigkeit und andererseits zu einer hohen Biegesteifigkeit führt. Der Achskörper ist bevorzugt aus einem Gussmaterial, wie insbesondere einem Stahlgussmaterial gefertigt. Des Weiteren bevorzugt kann der Achskörper aus einem Verbundfaserwerkstoff ausgebildet sein.

Davon ausgehend liegt der Erfindung die Aufgabe zugrunde, eine Fahrzeugachse der eingangs genannten Art zu schaffen, die in Bezug auf die Verbindung von Träger und Anbindungsteilen eine hohe Festigkeit bei kompakter Ausführung der Verbindungsstellen aufweist und robust gegen Ermüdungsversagen ist.

Diese Aufgabe wird durch eine Fahrzeugachse mit den in Anspruch 1 angegebenen Merkmalen gelöst. Vorteilhafte Ausgestaltungen der erfindungsgemäßen Fahrzeugachse sind in den von Anspruch 1 abhängigen Ansprüchen angegeben.

Die erfindungsgemäße Fahrzeugachse ist dadurch gekennzeichnet, dass der Verbundwerkstoff aus Kunststoff und darin integrierten Verstärkungsfasern gebildet ist, und dass der Träger aus mindestens zwei parallel zueinander angeordneten Teilträgern aus Verbundwerkstoff der eingangs besagten Art gebildet ist, wobei die Anbindungsteile Stege aufweisen, die zwischen den Teilträgern angeordnet sind und mit diesen verklebt sind.

Durch die Ausführung des Trägers aus mindestens zwei parallel zueinander angeordneten Teilträgern kann bei kompakter Ausführung der Verbindungsstellen die wirksame Klebstofffläche zur Aufnahme von Scherkräften deutlich vergrößert werden. Dadurch erhält die Klebeverbindung eine besonders hohe Festigkeit und eine hohe Robustheit gegen Ermüdungsversagen. Der Steg des jeweiligen Anbindungsteils definiert dabei eine vorteilhafte Klebefläche für den Klebstoff.

Im Unterschied zu einer herkömmlichen nicht-angetriebenen Fahrzeugachse (Starrachse), die einen einzelnen Träger als Achse bzw. Querträger aufweist, und bei welcher das Anbindungsteil einen buchsenartigen Aufnahmeabschnitt zur Aufnahme des einzelnen Trägers hat und mit diesem Aufnahmeabschnitt mit dem Träger verklebt wird, wobei jedoch häufig der aufgebrachte Klebstoff beim Zusammensetzen von Träger und Anbindungsteil abgestreift wird, lässt sich das Anbindungsteil bei der erfindungsgemäßen Fahrzeugachse weitestgehend ohne Abstreifen des Klebstoffs mit den Teilträgern verkleben. Das Anbindungsteil der erfindungsgemäßen Fahrzeugachse umgreift den Umfang des jeweiligen Teilträgers vorzugsweise nur partiell.

Der aus mindestens zwei parallel zueinander angeordneten Teilträgern gebildete Träger der erfindungsgemäßen Fahrzeugachse kann auch als Doppelträger oder Mehrelementträger bezeichnet werden.

Vorzugsweise sind die den Träger bildenden, parallel zueinander angeordneten Teilträger als Hohlträger ausgeführt, besonders bevorzugt als pultrudierte Teilträger bzw. Hohlträger ausgeführt. Pultrudierte Hohlträger zeichnen sich bei geringem Gewicht durch hervorragende mechanische Eigenschaften aus, insbesondere durch eine hohe Biegefestigkeit und einen hohen Elastizitätsmodul.

Eine weitere vorteilhafte Ausgestaltung der Erfindung sieht vor, dass die Teilträger im Wesentlichen zueinander gleiche Querschnittsprofile aufweisen. Die Teilträger lassen sich somit kostengünstig mittels einer Extrudier- oder Strangziehanlage herstellen, wobei zur Erzeugung des gewünschten Querschnittsprofils lediglich eine einzige Formvorrichtung benötigt wird und die Teilträger durch Ablängen (Abtrennen) des erzeugten kontinuierlichen Profilstrangs erhalten werden.

Alternativ können die Teilträger zueinander verschiedene Querschnittsprofile aufweisen. Diese Ausgestaltung der Erfindung ist in Fällen vorteilhaft, in denen durch die Kombination verschiedener Querschnittsprofile bestimmte Funktionen der Fahrzeugachse bzw. bestimmte Funktionen an der Fahrzeugachse besser oder einfacher realisiert werden können, z. B. die Anbringung von Haltern für Stoßdämpfer an einem der Teilträger mit optimierter Abstützung und Krafteinleitung in den betreffenden Teilträger einerseits, und andererseits die Anbringung von weiteren Haltern für andere spezielle Federungskomponenten an einem oder dem anderen der Teilträger.

Insbesondere ist es vorteilhaft, wenn die Teilträger nach einer weiteren bevorzugten Ausgestaltung der Erfindung im Wesentlichen ebene Profilwandabschnitte aufweisen, die mit den Stegen der Anbindungsteile verklebt sind. Diese Ausgestaltung ist hinsichtlich einer einfachen Montage und Verbindung der Teilträger mit den Anbindungsteilen, und auch hinsichtlich kompakter Abmessungen des aus den Teilträgern gebildeten Doppel- oder Mehrelementträgers von Vorteil.

Eine weitere Ausgestaltung der Erfindung sieht vor, dass die Teilträger einen Spalt begrenzen, der eine Spalttiefe aufweist, die rechtwinklig zu einer Längsachse der Teilträger und rechtwinklig zu einer durchschnittlichen Breite des Spaltes zu messen ist, wobei jeder der Stege der Anbindungsteile so dimensioniert ist, dass er sich in Richtung der Spalttiefe mit einem Längenmaß erstreckt, welches mindestens 30%, vorzugsweise mindestens 40%, besonders bevorzugt mindestens 50% der Spalttiefe beträgt. Hierdurch lässt sich bei der Leichtbaukonstruktion der Fahrzeugachse kostengünstig eine hohe Festigkeit der Verbindung der Teilträger mit den Anbindungsteilen verwirklichen.

Nach einer weiteren Ausgestaltung der erfindungsgemäßen Fahrzeugachse weisen die Stege und/oder die Anbindungsteile mindestens zwei Kantenflächen auf, die im Wesentlichen schräg zu einer Längsachse der Teilträger verlaufen, wobei die Kantenflächen dergestalt ausbildet sind, dass sich an den Kantenflächen angelegte Tangenten oder Geraden im bestimmungsgemäßen Montagezustand der Fahrzeugachse unterhalb dieser schneiden. Diese Ausgestaltung trägt bei hoher Festigkeit der Verbindung von Teilträgern und Anbindungsteilen untereinander zu einer optimierten Leichtbaukonstruktion bei. Dies gilt insbesondere hinsichtlich der Biegemomentaufnahme der Fahrzeugachse bei vertikaler Belastung ihrer Enden.

Eine weitere vorteilhafte Ausgestaltung der erfindungsgemäßen Fahrzeugachse ist dadurch gekennzeichnet, dass die Stege den Teilträgern zugewandte Erhebungen oder Rippen aufweisen. Die Erhebungen oder Rippen stellen beim Anbringen der Anbindungsteile an den Teilträgern sicher, dass im fertigen Zustand der erfindungsgemäßen Fahrzeugachse der Klebstoff im Verbindungsbereich eine bestimmte Mindestdicke aufweist und aus dem Verbindungsbereich nicht zu sehr ungewollt verdrängt wird.

Alternativ oder zusätzlich liegt es auch im Rahmen der Erfindung, dass die Teilträger den Stegen der Anbindungsteile zugewandte Erhebungen oder Rippen aufweisen, welche wiederum sicherstellen, dass im fertigen Zustand der Fahrzeugachse der Klebstoff im Verbindungsbereich eine bestimmte Mindestdicke aufweist.

Nach einer weiteren Ausgestaltung der erfindungsgemäßen Fahrzeugachse weist mindestens einer der Teilträger einen metallischen Verstärkungseinsatz auf, der vorzugsweise als Hohlprofil ausgeführt ist. Hierdurch kann die in Leichtbaukonstruktion ausgeführte Fahrzeugachse an einem stärker belasteten Bereich des Teilträgers gezielt verstärkt werden. Der Verstärkungseinsatz ist vorzugsweise aus Stahl, besonders bevorzugt aus hochfestem Stahl gefertigt, beispielsweise aus Stahl, der eine Zugfestigkeit Rm im Bereich von 1000 bis 2000 MPa aufweist. Der Verstärkungseinsatz ist vorzugsweise zumindest in dem Längenabschnitt des betreffenden Teilträgers integriert, in welchem der Teilträger mit dem Steg des Anbindungsteils verklebt ist.

Eine weitere Ausgestaltung der Erfindung sieht vor, dass der Verstärkungseinsatz parallel zueinander verlaufende Hohlkanäle aufweist. Hierdurch wird die Formstabilität des Verstärkungseinsatzes und damit die Formstabilität des diesen enthaltenden Teilträgers zum Zwecke des Leichtbaus weiter verbessert.

Für eine kostengünstige Fertigung des Verstärkungseinsatzes ist es vorteilhaft, wenn gemäß einer weiteren Ausgestaltung der Erfindung der Verstärkungseinsatz aus mindestens einem Stahlblech gefertigt ist, welches eine Blechdicke im Bereich von 0,5 mm bis 1 mm, vorzugsweise im Bereich von 0,5 mm bis 0,9 mm aufweist, wobei das Stahlblech in ein Hohlprofil geformt ist, welches entlang seiner Länge miteinander verschweißte Blechabschnitte aufweist. Mit Stahlblech in besagter Blechdicke lässt sich der Verstärkungseinsatz kostengünstig durch Rollformen herstellen. Das Verschweißen der Blechabschnitte erfolgt vorzugsweise durch Punktschweißen mit parallel zu der Mittelachse des Verstärkungseinsatzes gesetzten Schweißpunkten. Vorzugsweise ist das Verstärkungsteil aus einem einzelnen Stahlblech gefertigt, das durch Umformen, z. B. Rollformen, in ein Hohlprofil geformt ist.

Die Gesamtwanddicke des als Hohlprofil ausgebildeten Teilträgers, einschließlich des Verstärkungseinsatzes, liegt vorzugsweise im Bereich von 5 bis 8 mm, besonders bevorzugt im Bereich von 6 bis 7 mm.

Eine weitere vorteilhafte Ausgestaltung der erfindungsgemäßen Fahrzeugachse sieht vor, dass die Anbindungsteile zumindest teilweise in Form von durch Extrusion hergestellten Bauteilen ausgeführt sind. Durch Extrusion lassen sich die Anbindungsteile kostengünstig als Leichtbauteile herstellen.

Nach einer weiteren Ausgestaltung der Erfindung weist der jeweilige Steg des Anbindungsteils einen Flansch- oder Fußabschnitt auf, welcher an der Unterseite der Teilträger eine Formschlussverbindung zwischen dem den Steg aufweisenden Anbindungsteil und den Teilträgern sicherstellt. Durch diese Ausgestaltung ergibt sich eine besonders stabile Verbindung der Teilträger mit dem jeweiligen Anbindungsteil, wobei die Formschlussverbindung die Klebeverbindung ergänzt bzw. verstärkt. Die durch den Flansch- oder Fußabschnitt des Steges gebildete Formschlussverbindung kann ein Abschälen von Klebstoff der Klebeverbindung verhindern und sichert die Klebeverbindung bei deren eventuellen Versagen ab.

Eine weitere vorteilhafte Ausgestaltung der Erfindung sieht vor, dass mindestens einer der Teilträger einen Profilwandabschnitt aufweist, der schräg zu einer Ebene verläuft, in welcher die Stege liegen, wobei an diesem schräg zu der Ebene verlaufenden Profilwandabschnitt Halterungen, vorzugsweise gabelförmige Halterungen zur Anbindung von Stoßdämpfern angebracht, vorzugsweise angeklebt sind. Durch ein solches Profil (Querschnittsprofil) des Teilträgers werden dessen mechanischen Eigenschaften, insbesondere die Biegefestigkeit und Haltbarkeit verbessert. Zudem vereinfacht ein solches Profil des Teilträgers die Herstellung und die Anbindung der Halterungen, die ihrerseits der Anbindung von Stoßdämpfern dienen. Eine vorteilhafte Weiterbildung dieser Ausgestaltung ist dadurch gekennzeichnet, dass besagte Ebene mit dem schräg zu ihr verlaufenden Profilwandabschnitt einen Winkel im Bereich von 30° bis 45°, vorzugsweise im Bereich von 35° bis 40°, besonders bevorzugt im Bereich von 36° bis 39° definiert. Die Halterungen zur Anbindung von Stoßdämpfern lassen sich so optimal an den Teilträger anbringen, insbesondere ankleben, so dass die Klebeverbindung der jeweiligen Halterung an dem Teilträger hohe Scherkräfte aufnehmen kann.

Eine weitere Ausgestaltung der Erfindung sieht vor, dass die Anbindungsteile Bohrungen, vorzugsweise Gewindebohrungen, zur Anbindung einer Radträgerplatte und/oder einer Blattfeder aufweisen. Hierdurch lassen sich eine Radträgerplatte und/oder eine Blattfeder einfach und zuverlässig an die Fahrzeugachse anbinden.

Nachfolgend wird die Erfindung anhand einer mehrere Ausführungsbeispiele darstellenden Zeichnung näher erläutert. Es zeigen:
- Fig. 1: ein erstes Ausführungsbeispiel einer erfindungsgemäßen Fahrzeugachse in einer perspektivischen Darstellung;
- Fig. 2: den rechten Endabschnitt der Fahrzeugachse aus Fig. 1, wobei der vordere Teilträger zur besseren Veranschaulichung des mit den Teilträgern verklebten Steges des Anbindungsteils weggelassen ist;
- Fig. 3a: eine Querschnittansicht der Fahrzeugachse aus Fig. 1 entlang der Schnittlinie IIIa-IIIa in Fig. 2;
- Fig. 3b: eine vergrößerte Darstellung des Details IIIb in Fig. 3a;
- Fig. 4: ein zweites Ausführungsbeispiel einer erfindungsgemäßen Fahrzeugachse in einer Querschnittansicht;
- Fig. 5: ein drittes Ausführungsbeispiel einer erfindungsgemäßen Fahrzeugachse in einer Querschnittansicht;
- Fig. 6: ein viertes Ausführungsbeispiel einer erfindungsgemäßen Fahrzeugachse mit Verstärkungseinsätzen in einer Querschnittansicht; und

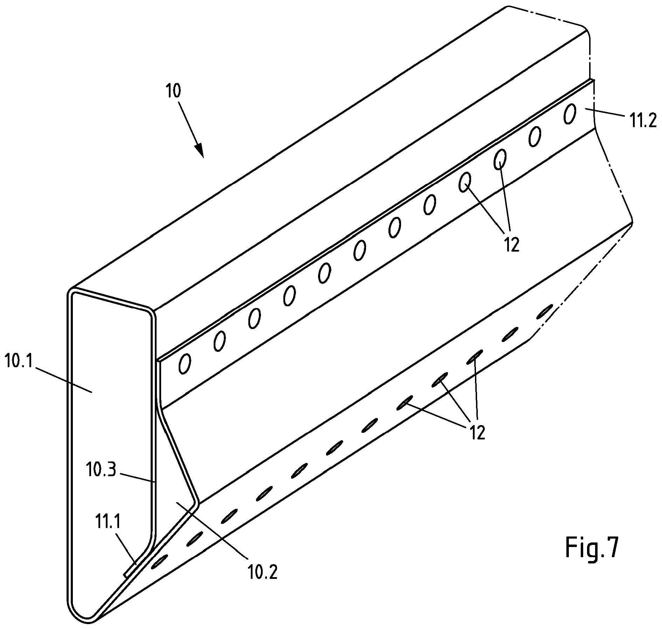

- Fig. 7: einen Abschnitt eines Verstärkungseinsatzes aus Fig. 6 in einer perspektivischen Darstellung.

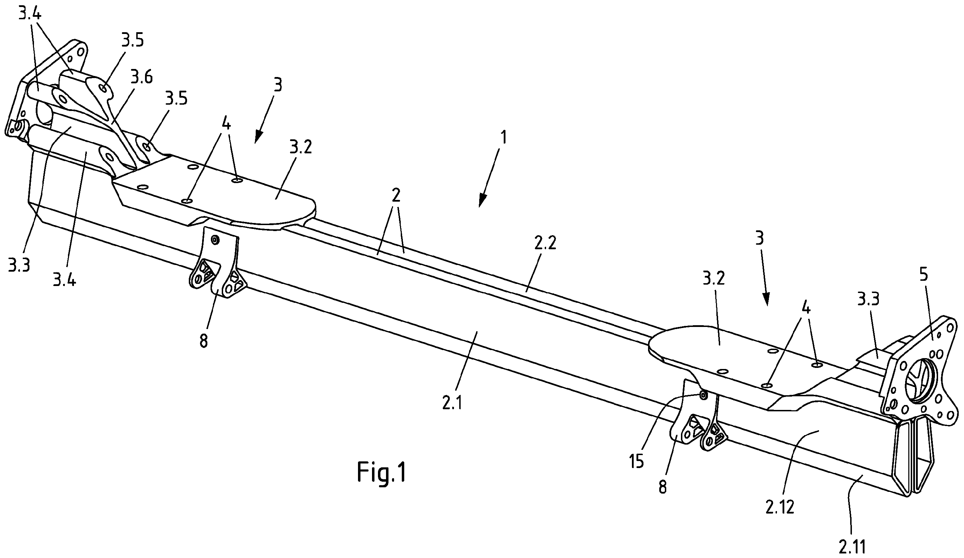

Bei der in den Figuren 1 bis 3b dargestellten Fahrzeugachse 1 für eine Radaufhängung handelt es sich um eine nicht angetriebene Achse, vorzugsweise Hinterachse, die auch als Starrachse bezeichnet werden kann. Die Fahrzeugachse 1 ist für Lastkraftwagen, insbesondere für Kleinlastwagen und Kleintransporter bestimmt.

Herkömmliche Fahrzeugachsen dieser Art sind aus einem einzelnen, quer zur Fahrzeuglängsmittelachse verlaufenden Träger - auch Querträger genannt - gebildet, der aus Stahl oder faserverstärktem Kunststoff (Verbundwerkstoff) hergestellt ist. Bei der erfindungsgemäßen Fahrzeugachse 1 ist dieser quer zur Fahrzeuglängsmittelachse verlaufende Träger 2 aus mehreren parallel zueinander angeordneten Teilträgern 2.1, 2.2, vorzugsweise aus zwei Teilträgern 2.1, 2.2 gebildet. Die beiden Teilträger 2.1, 2.2 der in den Figuren 1 bis 3b dargestellten Fahrzeugachse 1 definieren einen Doppelträger.

Die Teilträger 2.1, 2.2 bestehen im Wesentlichen aus Verbundwerkstoff, der aus Kunststoff und darin integrierten Verstärkungsfasern gebildet ist. Als Verstärkungsfasern werden beispielsweise synthetische Fasern aus Glas, Kohlenstoff und/oder Aramid verwendet, die als Rovings, Gelege, Gewebe oder Vliese verwendet werden können. Damit können die mechanischen Eigenschaften des jeweiligen Teilträgers 2.1, 2.2 in einem weiten Bereich variiert werden. Für die Matrix des Verbundwerkstoffs (Faserverbundwerkstoffs) wird vorzugsweise duroplastischer Kunststoff, z. B. Polyesterharz oder Epoxidharz verwendet.

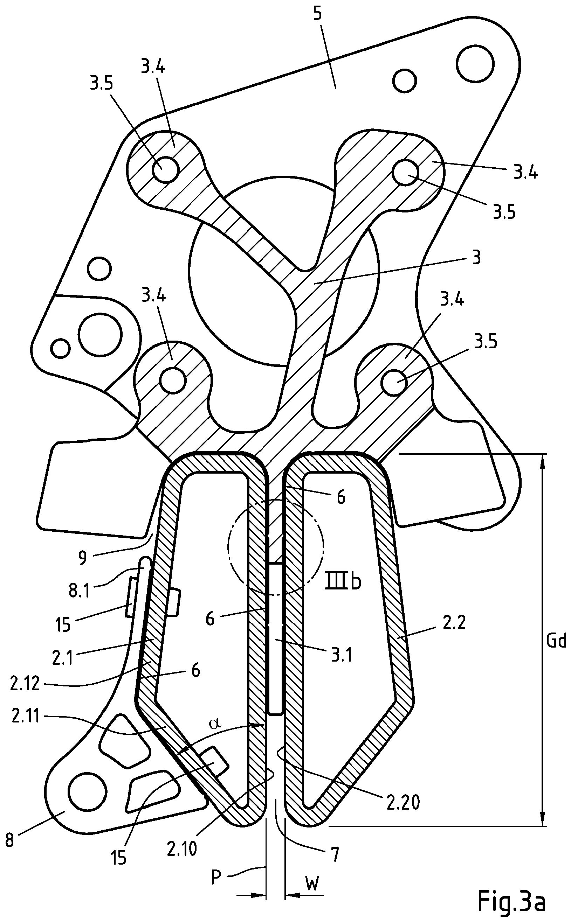

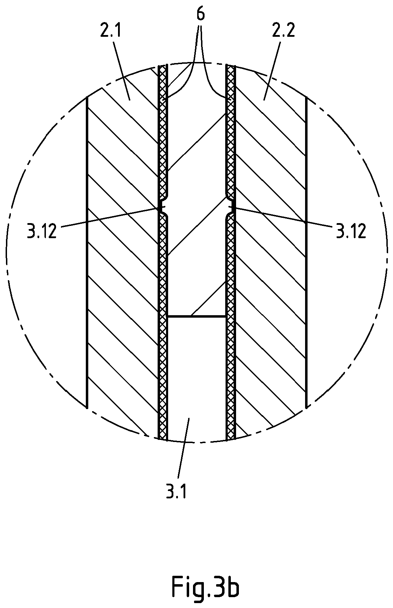

Die Teilträger 2.1, 2.2 sind als Hohlprofile ausgeführt und vorzugsweise durch Strangziehen (Pultrusion) hergestellt. Wie in den Figuren 1 und 3a gut zu erkennen ist, haben die Teilträger 2.1, 2.2 der Fahrzeugachse 1 untereinander gleiche Querschnittsprofile. Die Teilträger 2.1, 2.2 können somit aus einem einzelnen längeren oder kontinuierlichen Strang durch Ablängen (Abtrennen) desselben gewonnen werden. Die Teilträger 2.1, 2.2 sind in diesem Ausführungsbeispiel zueinander spiegelsymmetrisch angeordnet.

Des Weiteren umfasst die Fahrzeugachse 1 Anbindungsteile 3 aus Metall, vorzugsweise Leichtmetall, z. B. aus Aluminium oder einer Legierung auf Basis von Aluminium. Insbesondere aufgrund ihrer aus faserverstärktem Kunststoff hergestellten Teilträger 2.1, 2.2 hat die erfindungsgemäße Fahrzeugachse 1 ein relativ geringes Gewicht. Die Anbindungsteile 3 sind mit den Teilträgern 2.1, 2.2 verbunden und für eine Anbindung eines Radträgers und für eine Anbindung mindestens eines Federbauteils und/oder Dämpferbauteils hergerichtet. Zu ihrer Befestigung an den Teilträgern 2.1, 2.2 weisen die Anbindungsteile 3 Stege 3.1 auf, die zwischen den Teilträgern 2.1, 2.2 angeordnet sind und mit diesen verklebt sind.

Die Anbindungsteile 3 sind vorzugsweise aus bzw. als extrudierten Bauteilen hergestellt. In dem Ausführungsbeispiel gemäß Fig. 1 hat das jeweilige Anbindungsteil 3 einen im Wesentlichen plattenförmigen Abschnitt 3.2 mit Durchgangslöchern oder Bohrungen 4 zur Anbindung einer Blattfeder (nicht gezeigt). An den plattenförmigen Abschnitt 3.2 schließt sich in Richtung des Endes der Teilträger 2.1, 2.2 ein Profilabschnitt 3.3 an, der mehrere Profilzweige 3.4 umfasst. Die Profilzweige 3.4 sind mit Bohrungen 3.5, vorzugsweise Gewindebohrungen zur Anbindung einer Radträgerplatte (Radnabenplatte) 5 versehen. Der Profilabschnitt 3.3 hat dabei ein äußeres, rechtwinklig zu den Achsen der Bohrungen 3.5 geschnittenes Stirnende und eine innere, schräg zu den Achsen der Bohrungen 3.5 geschnittene Stirnfläche 3.6 (vgl. Fig. 1).

Der Steg 3.1 zur Befestigung des Anbindungsteils 3 an den Teilträgern 2.1, 2.2 ist an der Unterseite des plattenförmigen Abschnitts 3.2 und des Profilabschnitts 3.3 einstückig angeformt. Der Steg 3.1 steht von der Unterseite des plattenförmigen Abschnitts 3.2 im Wesentlichen oder nahezu rechtwinklig ab. Im montierten Zustand umgreift das Anbindungsteil 3 den Umfang des jeweiligen Teilträgers 2.1, 2.2 nur partiell.

Die Teilträger 2.1, 2.2 weisen vorzugsweise im Wesentlichen ebene Profilwandabschnitte 2.10, 2.20 auf, die mit den Stegen 3.1 der Anbindungsteile 3 verklebt sind. Die durchschnittliche Wanddicke des Hohlprofils liegt beispielsweise in einem Bereich von 5 bis 8 mm, insbesondere im Bereich von 6 bis 7 mm.

Die Teilträger 2.1, 2.2 begrenzen einen Spalt 7. Der Spalt 7 hat eine Spalttiefe Gd, die rechtwinklig zu der Längsachse der Teilträger 2.1, 2.2 und rechtwinklig zu einer durchschnittlichen Breite W des Spaltes 7 zu messen ist (vgl. Fig. 3a). Der Steg 3.1 des jeweiligen Anbindungsteils 3 ist so dimensioniert, dass er sich in Richtung der Spalttiefe Gd mit einem Längenmaß erstreckt, welches mindestens 30% der Spalttiefe Gd beträgt. Bei dem Ausführungsbeispiel gemäß Fig. 3a erstreckt sich der Steg 3.1 in Richtung der Spalttiefe Gd mit einem Längenmaß, das zwischen 50% und 80% der Spalttiefe Gd beträgt.

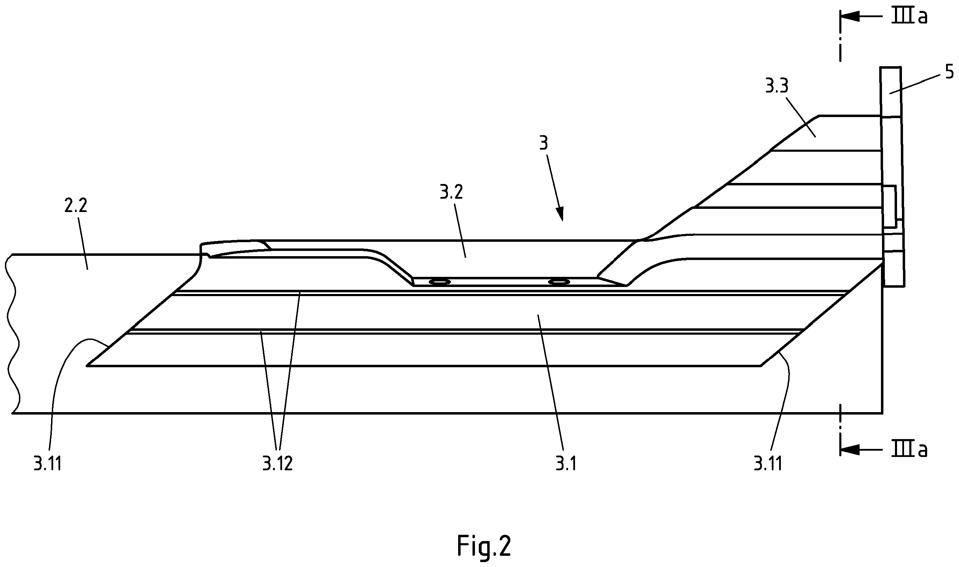

In dem in den Figuren 1 bis 3b gezeigten Ausführungsbeispiel weisen die Stege 3.1 der Anbindungsteile 3 Kantenflächen 3.11 auf, die im Wesentlichen schräg zu einer Längsachse der Teilträger 2.1, 2.2 verlaufen (vgl. Fig. 2). Die Kantenflächen 3.11 sind dabei dergestalt ausbildet, dass sich an den Kantenflächen 3.11 angelegte Tangenten oder Geraden im bestimmungsgemäßen Montagezustand der Fahrzeugachse 1 unterhalb dieser schneiden. In Fig. 2 ist zu erkennen, dass die Form des Steges 3.1 des jeweiligen Anbindungsteils 3 im Wesentlichen einem Parallelogramm ähnelt (vgl. Fig. 2).

Der jeweilige Steg 3.1 weist beidseitig den Teilträgern 2.1, 2.2 zugewandte Erhebungen oder Rippen 3.12 auf. Die Erhebungen oder Rippen 3.12 wirken wie Abstandshalter und begünstigen die Einstellung einer gewissen Mindestdicke des zwischen dem Steg 3 und den Teilträgern 2.1, 2.2 angeordneten Klebstoffs 6.

An einem der Teilträger 2.1, 2.2 sind Halterungen 8 zur Anbindung von Stoßdämpfern (nicht gezeigt) angebracht. Bei dem in den Figuren 1 bis 3b gezeigten Ausführungsbeispiel weist der Teilträger 2.1 einen unteren Profilwandabschnitt 2.11 auf, der schräg zu der Ebene P verläuft, in welcher die Stege 3.1 der Anbindungsteile 3 liegen, wobei an diesem Profilwandabschnitt 2.11 gabelförmige Halterungen 8 zur Anbindung von Stoßdämpfern angebracht, vorzugsweise angeklebt sind. Der untere, mit den Halterungen 8 versehene Profilwandabschnitt 2.11 ist so geformt, dass er mit der Ebene P, in welcher die Stege 3.1 liegen, einen Winkel α im Bereich von 30° bis 45°, beispielsweise im Bereich von 36° bis 39° begrenzt. Hierdurch kann die Klebeverbindung zwischen der Halterung 8 und dem Teilträger 2.1 hohe Scherkräfte aufnehmen. Zusätzlich zu der Klebeverbindung ist die Halterung vorzugsweise mittels Schrauben oder Nieten mit dem Teilträger 2.1 verbunden. Des Weiteren hat die Halterung 8 einen Schenkel oder Flansch 8.1, der an einem gegenüber dem unteren Profilwandabschnitt 2.11 abgewinkelten oberen Profilwandabschnitt 2.12 anliegt und mit diesem mittels einer Schraube oder Niet 15 verbunden ist.

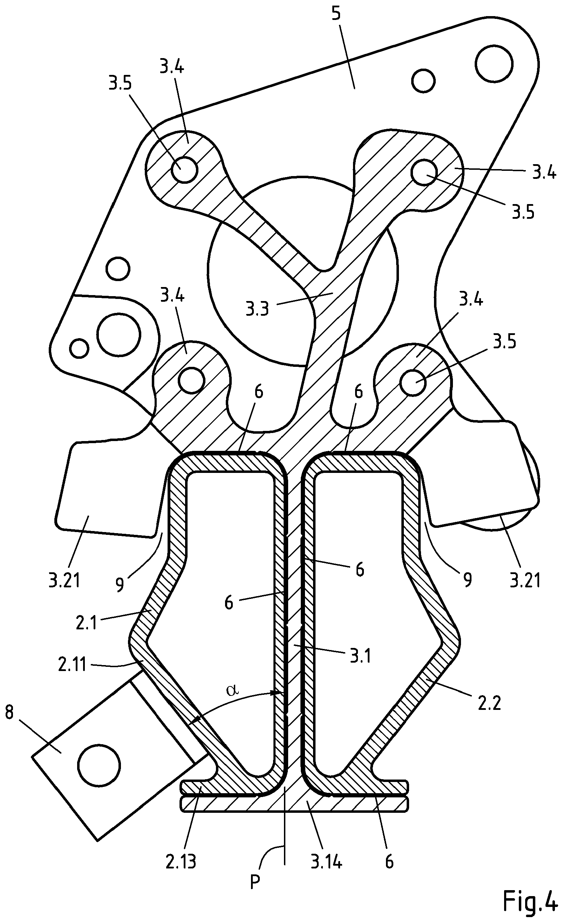

Das in Fig. 4 gezeigte Ausführungsbeispiel unterscheidet sich von dem in den Figuren 1 bis 3b gezeigten Ausführungsbeispiel insbesondere durch die Hohlprofilform der Teilträger 2.1, 2.2 und die Form der an den Anbindungsteilen 3 ausgebildeten Stege 3.1. Der Steg 3.1 des Anbindungsteils 3 hat in dem Ausführungsbeispiel gemäß Fig. 4 einen Flansch- oder Fußabschnitt 3.14, welcher an der Unterseite der Teilträger 2.1, 2.2 eine Formschlussverbindung zwischen dem Anbindungsteil 3 und den Teilträgern 2.1, 2.2 sicherstellt. Der Flansch- oder Fußabschnitt 3.14 kann einstückig mit dem Steg 3.1 ausgebildet sein. Der obere Abschnitt des Anbindungsteils 3, insbesondere der plattenförmigen Abschnitt 3.2, definiert zusammen mit dem Steg 3.1 und dessen Flansch- oder Fußabschnitt 3.14 ein Doppel-T-förmiges Querschnittsprofil. Die Teilträger 2.1, 2.2 lassen sich unter Zwischenordnung von Klebstoff 6 formschlüssig in die seitlichen Aufnahmen dieses Querschnittsprofils einsetzen. Der plattenförmige Abschnitt 3.2 des Anbindungsteils 3 weist voneinander beabstandete, seitlich nach unten vorstehende, klauenartige Anschläge 3.21 auf, welche die eingesetzten Teilträger 2.1, 2.2 oben umgreifen. Die klauenartigen Anschläge 3.21 sind dabei innenseitig so ausgebildet, dass sich der Aufnahmeraum 9 für den jeweiligen Teilträger 2.1, 2.2 in Richtung der Unterseite des plattenförmigen Abschnitts 3.2 verjüngt. Im eingesetzten Zustand sitzt der jeweilige Teilträger 2.1, 2.2 unter Zwischenordnung von Klebstoff 6 vorzugsweise mit leichter Presspassung formschlüssig in der durch den plattenförmigen Abschnitt 3.2, den Steg 3.1 und den Flansch- oder Fußabschnitt 3.14 begrenzten Aufnahme.

Die ebenfalls aus Faserverbundmaterial hergestellten Teilträger 2.1, 2.2 gemäß Fig. 4 haben wiederum einander entsprechende Querschnittsprofile. Auch sind die Teilträger 2.1, 2.2 spiegelsymmetrisch zueinander angeordnet. Im Unterschied zu dem Ausführungsbeispiel gemäß Fig. 3a weisen die Teilträger 2.1, 2.2 gemäß Fig. 4 an ihrer Unterseite jeweils einen flachen Profilwandabschnitt 2.13 auf, der parallel zu dem Flansch- oder Fußabschnitt 3.14 verläuft. Der flache Profilwandabschnitt 2.13 bewirkt eine gewisse Klemmwirkung und verhindert im eingesetzten Zustand des Teilträgers 2.1, 2.2, insbesondere solange der Klebstoff 6 noch nicht ausreichend abgebunden hat, ein ungewolltes Herauswandern des Teilträgers 2.1, 2.2 aus dem Aufnahmeraum 9.

Des Weiteren hat der Teilträger 2.1, 2.2 gemäß Fig. 4 ebenfalls einen Profilwandabschnitt 2.11, der schräg zu der Ebene P verläuft, in welcher die Stege 3.1 der Anbindungsteile 3 liegen, wobei an diesem Profilwandabschnitt 2.11 wiederum Halterungen 8 zur Anbindung von Stoßdämpfern angebracht, vorzugsweise angeklebt sind.

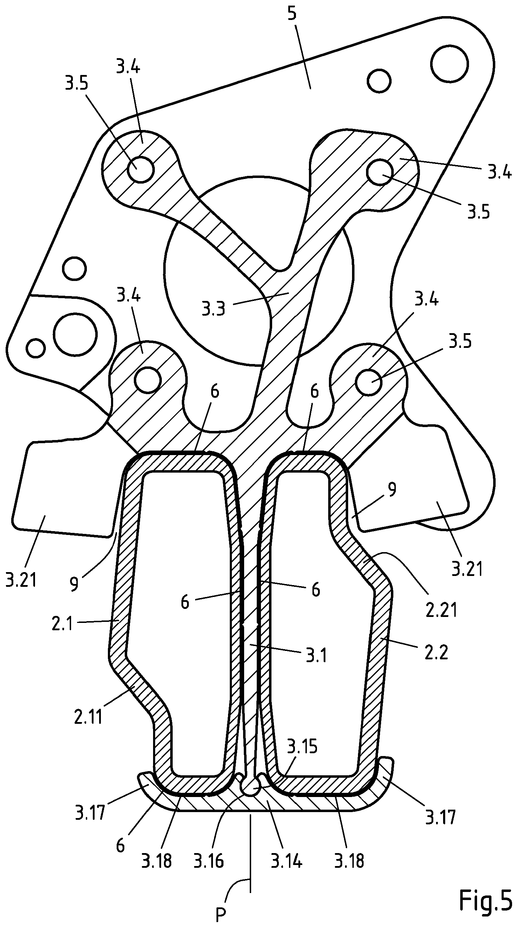

Das in Fig. 5 gezeigte Ausführungsbeispiel unterscheidet sich von den in den Figuren 1 bis 3b und Fig. 4 gezeigten Ausführungsbeispielen durch die Hohlprofilform der Teilträger 2.1, 2.2 und die Ausgestaltung der an den Anbindungsteilen 3 ausgebildeten Stege 3.1. Ähnlich wie bei dem Ausführungsbeispiel gemäß Fig. 4 ist der jeweilige Steg 3.1 mit einem Flansch- oder Fußabschnitt 3.14 versehen. In diesem Fall ist der Flansch- oder Fußabschnitt 3.14 aber nicht einstückig mit dem Steg 3.1 ausgebildet, sondern separat hergestellt und am unteren Ende 3.15 des Stegs 3.1 mit diesem verbunden. Die Verbindung ist z. B. als Schnappverbindung ausgeführt. Hierzu hat der Flansch- oder Fußabschnitt 3.14 beispielsweise eine Nut 3.16 mit einer Hinterschneidung, in die das untere Stegende 3.15, welches in Form eines breitenerweiterten Stegendes 3.15 ausgebildet ist oder eine hinterschnittene Kante aufweist, verrastend eingesetzt wird. Außerdem ist der Flansch- oder Fußabschnitt 3.14 in dem Ausführungsbeispiel gemäß Fig. 5 dergestalt ausgebildet, dass er die Unterseiten der Teilträger 2.1, 2.2 umgreift. Hierzu sind die seitlichen Ränder 3.17des Flansch- oder Fußabschnitt 3.14 nach oben geformt bzw. sind in dem Flansch- oder Fußabschnitt 3.14 rinnenförmige Mulden 3.18 zur Festlegung der Teilträger 2.1, 2.2 ausgebildet. Die den Teilträgern 2.1, 2.2 zugewandten Flächen des Anbindungsteils 3, insbesondere die Flächen des Steges 3.1 und auch vorzugsweise des Flansch- oder Fußabschnitts 3.14 sind dabei mit Klebstoff 6 versehen.

Die aus Faserverbundmaterial hergestellten Teilträger 2.1, 2.2 gemäß Fig. 5 haben wiederum einander entsprechende Querschnittsprofile. Jedoch sind die Teilträger 2.1, 2.2 in diesem Fall nicht spiegelsymmetrisch, sondern verkehrt zueinander angeordnet. Allerdings hat jeder der Teilträger 2.1, 2.2 einen Profilwandabschnitt 2.11 bzw. 2.21, der schräg zu der Ebene P verläuft, in welcher die Stege 3 der Anbindungsteile 3 liegen, wobei an einem dieser Profilwandabschnitte 2.11, 2, und zwar an dem unteren Profilwandabschnitt 2.11, Halterungen (hier nicht gezeigt) zur Anbindung von Stoßdämpfern angebracht, vorzugsweise angeklebt werden können.

Um die mechanischen Eigenschaften der leichten Fahrzeugachse 1 zu optimierten, weist mindestens einer der Teilträger 2.1, 2.2 einen metallischen Verstärkungseinsatz 10 auf, der vorzugsweise als Hohlprofil ausgeführt ist. Der Verstärkungseinsatz 10 kann sich über die Gesamtlänge des betreffenden Teilträgers 2.1 und/oder 2.2 erstrecken. Zur gezielten Verbesserung der mechanischen Eigenschaften bei geringem Gesamtgewicht der Fahrzeugachse 1 kann der betreffende Teilträger 2.1, 2.2 aber auch nur partiell mit einem oder mehreren Verstärkungseinsätzen 10 versehen sein. Beispielsweise liegt es Rahmen der Erfindung, dass sich die Verstärkungseinsätze 10 innerhalb des Teilträgers 2.1, 2.2 nur entlang oder im Bereich der Anbindungsteile 3 erstrecken.

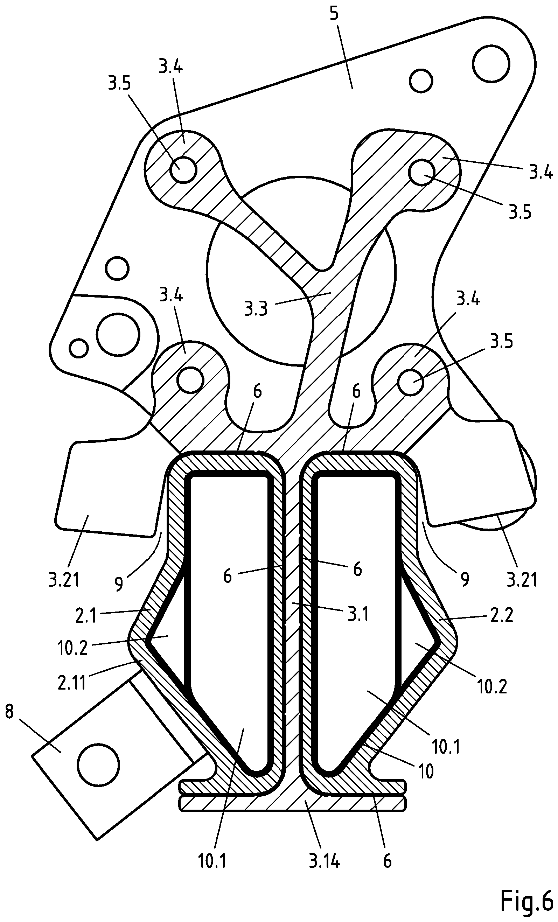

Ein Ausführungsbeispiel der leichten erfindungsgemäßen Fahrzeugachse 1 mit in den Teilträgern 2.1, 2.2 integrierten Verstärkungseinsätzen 10 ist in Fig. 6 gezeigt. Der Verstärkungseinsatz 10 wird vorzugsweise während der Herstellung der Teilträger 2.1, 2.2 in einen durch Strangziehen erzeugten Hohlprofilstrang eingebettet. Das Querschnittsprofil des Verstärkungseinsatzes 10 entspricht im Wesentlichen der Innenkontur des Hohlprofilstrangs. Vorzugsweise weist der Verstärkungseinsatz 10 jedoch parallel zueinander verlaufende Hohlkanäle 10.1, 10.2 auf. Mindestens ein kleinerer Hohlkanal 10.2 mit einer Trennwand 10.3 ist gegenüberliegend dem schräg verlaufenden Profilwandabschnitt 2.11 des Teilträgers 2.1 angeordnet, um diesen Profilwandabschnitt 2.11, welcher der Anbindung einer Halterung für einen Stoßdämpfer dient, zu versteifen.

Der Verstärkungseinsatz 10 ist aus Stahlblech gefertigt, welches eine Blechdicke im Bereich von 0,5 mm bis 1 mm, vorzugsweise im Bereich von 0,5 mm bis 0,9 mm aufweist. Das Stahlblech ist dabei in ein Hohlprofil geformt, welches entlang seiner Länge miteinander verschweißte Blechabschnitte 11.1, 11.2 aufweist. Die Schweißverbindung der Blechabschnitte 11.1, 11.2 ist vorzugsweise durch eine Vielzahl von entlang des äußeren Randes des Stahlblechs und parallel zur Längsachse des Verstärkungseinsatzes 10 angeordneter Schweißpunkte 12 realisiert.

Die Ausführung der Erfindung ist nicht auf die in der Zeichnung dargestellten Ausführungsbeispiele begrenzt. Vielmehr sind zahlreiche Varianten denkbar, die auch bei grundsätzlich abweichender Gestaltung von der in den Ansprüchen angegebenen Erfindung Gebrauch machen.

## Patentansprüche

1. Fahrzeugachse (1) für eine Radaufhängung, mit einem Träger (2) aus Verbundwerkstoff Anbindungsteilen (3) aus Metall, vorzugsweise Leichtmetall, wobei die Anbindungsteile mit dem Träger (2) verbunden und für eine Anbindung eines Radträgers und für eine Anbindung mindestens eines Federbauteils und/oder Dämpferbauteils hergerichtet sind, **dadurch gekennzeichnet, dass** der Verbundwerkstoff aus Kunststoff und darin integrierten Verstärkungsfasern gebildet ist, und dass der Träger (2) aus mindestens zwei parallel zueinander angeordneten Teilträgern (2.1, 2.2) aus Verbundwerkstoff der besagten Art gebildet ist, wobei die Anbindungsteile (3) Stege (3.1) aufweisen, die zwischen den Teilträgern angeordnet sind und mit diesen verklebt sind.

2. Fahrzeugachse nach Anspruch 1,
**dadurch gekennzeichnet, dass** die Teilträger (2.1, 2.2) pultrudierte Teilträger sind.

3. Fahrzeugachse nach Anspruch 1 oder 2,
**dadurch gekennzeichnet, dass** die Teilträger (2.1, 2.2) im Wesentlichen zueinander gleiche Querschnittsprofile aufweisen.

4. Fahrzeugachse nach einem der Ansprüche 1 bis 3,
**dadurch gekennzeichnet, dass** die Teilträger (2.1, 2.2) im Wesentlichen ebene Profilwandabschnitte (2.10, 2.20) aufweisen, die mit den Stegen (3.1) der Anbindungsteile (3) verklebt sind.

5. Fahrzeugachse nach einem der Ansprüche 1 bis 4, **dadurch gekennzeichnet, dass** die Teilträger (2.1, 2.2) einen Spalt (7) begrenzen, der eine Spalttiefe (Gd) aufweist, die rechtwinklig zu einer Längsachse der Teilträger (2.1, 2.2) und rechtwinklig zu einer durchschnittlichen Breite (W) des Spaltes (7) zu messen ist, wobei jeder der Stege (3.1) der Anbindungsteile (3) so dimensioniert ist, dass er sich in Richtung der Spalttiefe (Gd) mit einem Längenmaß erstreckt, welches mindestens 30%, vorzugsweise mindestens 40%, besonders bevorzugt mindestens 50% der Spalttiefe (Gd) beträgt.

6. Fahrzeugachse nach einem der Ansprüche 1 bis 5,
**dadurch gekennzeichnet, dass** die Stege (3.1) und/oder die Anbindungsteile (3) mindestens zwei Kantenflächen (3.11) aufweisen, die im Wesentlichen schräg zu einer Längsachse der Teilträger (2.1, 2.2) verlaufen, wobei die Kantenflächen (3.11) dergestalt ausbildet sind, dass sich an den Kantenflächen (3.11) angelegte Tangenten oder Geraden im bestimmungsgemäßen Montagezustand der Fahrzeugachse (1) unterhalb dieser schneiden.

7. Fahrzeugachse nach einem der Ansprüche 1 bis 6,
**dadurch gekennzeichnet, dass** die Stege (3.1) den Teilträgern (2.1, 2.2) zugewandte Erhebungen oder Rippen (3.12) aufweisen.

8. Fahrzeugachse nach einem der Ansprüche 1 bis 7,
**dadurch gekennzeichnet, dass** mindestens einer der Teilträger (2.1, 2.2) einen metallischen Verstärkungseinsatz (10) aufweist, der vorzugsweise als Hohlprofil ausgeführt ist.

9. Fahrzeugachse nach Anspruch 8,
**dadurch gekennzeichnet, dass** der Verstärkungseinsatz (10) parallel zueinander verlaufende Hohlkanäle (10.1, 10.2) aufweist.

10. Fahrzeugachse nach Anspruch 8 oder 9, **dadurch gekennzeichnet, dass** der Verstärkungseinsatz (10) aus mindestens einem Stahlblech gefertigt ist, welches eine Blechdicke im Bereich von 0,5 mm bis 1 mm, vorzugsweise im Bereich von 0,5 mm bis 0,9 mm aufweist, wobei das Stahlblech in ein Hohlprofil geformt ist, welches entlang seiner Länge miteinander verschweißte Blechabschnitte (11.1, 11.2) aufweist.

11. Fahrzeugachse nach einem der Ansprüche 1 bis 10,
**dadurch gekennzeichnet, dass** die Anbindungsteile (3) zumindest teilweise in Form von durch Extrusion hergestellten Bauteilen ausgeführt sind.

12. Fahrzeugachse nach einem der Ansprüche 1 bis 11,
**dadurch gekennzeichnet, dass** der jeweilige Steg (3.1) einen Flansch- oder Fußabschnitt (3.14) aufweist, welcher an der Unterseite der Teilträger eine Formschlussverbindung zwischen dem den Steg (3.1) aufweisenden Anbindungsteil (3) und den Teilträgern (2.1, 2.2) sicherstellt.

13. Fahrzeugachse nach einem der Ansprüche 1 bis 12,
**dadurch gekennzeichnet, dass** mindestens einer der Teilträger (2.1) einen Profilwandabschnitt (2.11) aufweist, der schräg zu einer Ebene (P) verläuft, in welcher die Stege (3) liegen, wobei an diesem schräg zu der Ebene (P) verlaufenden Profilwandabschnitt (2.11) Halterungen (8), vorzugsweise gabelförmige Halterungen (8) zur Anbindung von Stoßdämpfern angebracht, vorzugsweise angeklebt sind.

14. Fahrzeugachse nach Anspruch 13, **dadurch gekennzeichnet, dass** die Ebene (P) mit dem schräg zu dieser Ebene (P) verlaufenden Profilwandabschnitt (2.11) einen Winkel (α) im Bereich von 30° bis 45°, vorzugsweise im Bereich von 35° bis 40°, besonders bevorzugt im Bereich von 36° bis 39° definiert.

15. Fahrzeugachse nach einem der Ansprüche 1 bis 14, **dadurch gekennzeichnet, dass** die Anbindungsteile (3) Bohrungen (3.5), vorzugsweise Gewindebohrungen, zur Anbindung einer Radträgerplatte (5) und/oder einer Blattfeder aufweisen.

## Claims

1. Vehicle axle (1) for a wheel suspension, having
a beam (2) made of composite material and attachment parts (3) made of metal, preferably light metal, the attachment parts being connected to the beam (2) and being prepared for an attachment of a wheel carrier and for an attachment of at least one spring component and/or damper component,
**characterized in that** the composite material is formed from plastic and reinforcing fibers integrated therein, and **in that** the beam (2) is formed from at least two sub-beams (2.1, 2.2) made of composite material of the said type, which are arranged parallel to one another, the attachment parts (3) having webs (3.1) which are arranged between the sub-beams and are bonded thereto.

2. Vehicle axle according to claim 1,
**characterized in that** the sub-beams (2.1, 2.2) are pultruded sub-beams.

3. Vehicle axle according to claim 1 or 2,
**characterized in that** the sub-beams (2.1, 2.2) have cross-sectional profiles which are substantially identical to one another.

4. Vehicle axle according to any one of claims 1 to 3,
**characterized in that** the sub-beams (2.1, 2.2) have substantially planar profile wall sections (2.10, 2.20) which are bonded to the webs (3.1) of the attachment parts (3).

5. Vehicle axle according to any one of claims 1 to 4, **characterized in that** the sub-beams (2.1, 2.2) delimit a gap (7) which has a gap depth (Gd) to be measured at right angles to a longitudinal axis of the sub-beams (2.1, 2.2) and at right angles to an average width (W) of the gap (7), each of the webs (3.1) of the attachment parts (3) is dimensioned such that it extends in the direction of the gap depth (Gd) with a length dimension which is at least 30%, preferably at least 40%, particularly preferably at least 50% of the gap depth (Gd).

6. Vehicle axle according to any one of claims 1 to 5,
**characterized in that** the webs (3.1) and/or the attachment parts (3) have at least two edge surfaces (3.11) which run substantially obliquely with respect to a longitudinal axis of the sub-beams (2.1, 2.2), the edge surfaces (3.11) being formed in such a way that tangents or straight lines applied to the edge surfaces (3.11) intersect below the vehicle axle (1) in the intended assembled state of the latter.

7. Vehicle axle according to any one of the claims 1 to 6,
**characterized in that** the webs (3.1) have elevations or ribs (3.12) facing the sub-beams (2.1, 2.2).

8. Vehicle axle according to any one of claims 1 to 7,
**characterized in that** at least one of the sub-beams (2.1, 2.2) has a metallic reinforcing insert (10), which is preferably designed as a hollow profile.

9. Vehicle axle according to claim 8,
**characterized in that** the reinforcing insert (10) has hollow channels (10.1, 10.2) running parallel to one another.

10. Vehicle axle according to claim 8 or 9, **characterized in that** the reinforcing insert (10) is made of at least one steel sheet which has a sheet thickness in the range from 0.5 mm to 1 mm, preferably in the range from 0.5 mm to 0.9 mm, the steel sheet being formed into a hollow profile which has sheet sections (11.1, 11.2) welded to one another along its length.

11. Vehicle axle according to any one of claims 1 to 10,
**characterized in that** the attachment parts (3) are at least partially in the form of components produced by extrusion.

12. Vehicle axle according to any one of claims 1 to 11,
**characterized in that** the respective web (3.1) has a flange section or foot section (3.14) which ensures a positive connection between the attachment part (3) having the web (3.1) and the sub-beams (2.1, 2.2) on the underside of the sub-beams.

13. Vehicle axle according to any one of claims 1 to 12,
**characterized in that** at least one of the sub-beams (2.1) has a profile wall section (2.11) which runs obliquely with respect to a plane (P) in which the webs (3) lie, holders (8), preferably fork-shaped holders (8) for connecting shock absorbers, being attached, preferably bonded, to this profile wall section (2.11) running obliquely with respect to the plane (P).

14. Vehicle axle according to claim 13, **characterized in that** the plane (P) defines an angle (α) in the range from 30° to 45°, preferably in the range from 35° to 40°, particularly preferably in the range from 36° to 39°, with the profile wall section (2.11) running obliquely to this plane (P).

15. Vehicle axle according to any one of claims 1 to 14, **characterized in that** the attachment parts (3) have bores (3.5), preferably threaded bores, for connecting a wheel carrier plate (5) and/or a leaf spring.

## Revendications

1. Essieu de véhicule (1) pour une suspension de roue, avec un support (2) en matériau composite, et des pièces de liaison (3) en métal, de préférence en métal léger, dans lequel les pièces de liaison sont reliées au support (2) et aménagées pour une liaison d'un support de roue et pour une liaison d'au moins une pièce structurale élastique et/ou pièce structurale d'amortissement,
**caractérisé en ce que** le matériau composite est formé à partir de matière plastique et de fibres de renforcement intégrées dans celle-ci, et **en ce que** le support (2) est formé d'au moins deux supports partiels (2.1, 2.2) disposés parallèlement les uns aux autres en matériau composite du type indiqué, dans lequel les pièces de liaison (3) comprennent des parties formant pont (3.1) qui sont disposées entre les supports partiels et sont collées à ceux-ci.

2. Essieu de véhicule selon la revendication 1,
**caractérisé en ce que** les supports partiels (2.1, 2.2) sont des supports partiels pultrudés.

3. Essieu de véhicule selon la revendication 1 ou la revendication 2,
**caractérisé en ce que** les supports partiels (2.1, 2.2) présentent des profils de section transversale essentiellement identiques les uns aux autres.

4. Essieu de véhicule selon l'une des revendications 1 à 3,
**caractérisé en ce que** les supports partiels (2.1, 2.2) présentent des sections de paroi profilée (2.10, 2.20) essentiellement planes, lesquelles sont collées aux parties formant pont (3.1) des pièces de liaison (3).

5. Essieu de véhicule selon l'une des revendications 1 à 4, **caractérisé en ce que** les supports partiels (2.1, 2.2) délimitent une fente (7), laquelle présente une profondeur de fente (Gd) qui est à mesurer perpendiculairement à un axe longitudinal des supports partiels (2.1, 2.2) et perpendiculairement à une largeur moyenne (W) de la fente (7), dans lequel chacune des parties formant pont (3.1) des pièces de liaison (3) est dimensionnée de telle sorte qu'elle s'étende en direction de la profondeur de fente (Gd) avec une mesure de longueur qui s'élève à au moins 30 %, de préférence au moins 40 %, de manière particulièrement préférée au moins 50 % de la profondeur de fente (Gd).

6. Essieu de véhicule selon l'une des revendications 1 à 5,
**caractérisé en ce que** les parties formant pont (3.1) et/ou les pièces de liaison (3) comprennent au moins deux surfaces de bord (3.11), lesquelles s'étendent essentiellement en oblique par rapport à un axe longitudinal des supports partiels (2.1, 2.2), dans lequel les surfaces de bord (3.11) sont conçues de telle sorte que des tangentes ou droites appliquées aux surfaces de bord (3.11) à l'état de montage conforme à la destination de l'essieu de véhicule (1) se coupent en-dessous de celui-ci.

7. Essieu de véhicule selon l'une des revendications 1 à 6,
**caractérisé en ce que** les parties formant pont (3.1) des supports partiels (2.1, 2.2) comprennent des surélévations ou nervures (3.12) se faisant face.

8. Essieu de véhicule selon l'une des revendications 1 à 7,
**caractérisé en ce qu'**au moins l'un des supports partiels (2.1, 2.2) comprend un insert de renforcement métallique (10), lequel est réalisé de préférence en tant que profilé creux.

9. Essieu de véhicule selon la revendication 8,
**caractérisé en ce que** l'insert de renforcement (10) comprend des canaux creux (10.1, 10.2) s'étendant parallèlement les uns aux autres.

10. Essieu de véhicule selon la revendication 8 ou la revendication 9,
**caractérisé en ce que** l'insert de renforcement (10) est préparé à partir d'au moins une tôle d'acier, laquelle présente une épaisseur de tôle comprise dans la gamme de 0,5 mm à 1 mm, de préférence dans la gamme de 0,5 mm à 0,9 mm, dans lequel la tôle d'acier est façonnée en un profilé creux, lequel présente dans le sens de sa longueur des sections de tôle (11.1, 11.2) soudées les unes aux autres.

11. Essieu de véhicule selon l'une des revendications 1 à 10,
**caractérisé en ce que** les pièces de liaison (3) sont réalisées au moins en partie sous la forme de pièces structurales fabriquées par extrusion.

12. Essieu de véhicule selon l'une des revendications 1 à 11,
**caractérisé en ce que** la partie formant pont (3.1) respective présente une section joue ou section pied (3.14), laquelle assure au niveau du côté inférieur des supports partiels une liaison par complémentarité de forme entre la pièce de liaison (3) comprenant la partie formant pont (3.1) et les supports partiels (2.1, 2.2).

13. Essieu de véhicule selon l'une des revendications 1 à 12,
**caractérisé en ce qu'**au moins l'un des supports partiels (2.1) présente une section de paroi profilée (2.11), laquelle s'étend en oblique par rapport à un plan (P) dans lequel se situent les parties formant pont (3), dans lequel, au niveau de cette section de paroi profilée (2.11) s'étendant en oblique par rapport au plan (P), des éléments de retenue (8), de préférence des éléments de retenue (8) en forme de fourche, sont montés, de préférence collés, pour la liaison d'amortisseurs.

14. Essieu de véhicule selon la revendication 13, **caractérisé en ce que** le plan (P) définit avec la section de paroi profilée (2.11) s'étendant en oblique par rapport à ce plan (P) un angle (α) compris dans la gamme de 30° à 45°, de préférence dans la gamme de 35° à 40°, de manière particulièrement préférée dans la gamme de 36° à 39°.

15. Essieu de véhicule selon l'une des revendications 1 à 14, **caractérisé en ce que** les pièces de liaison (3) comprennent des alésages (3.5), de préférence des alésages filetés, pour la liaison d'une plaque de support de roue (5) et/ou d'un ressort à lame.
